# EUROPÄISCHE PATENTSCHRIFT

(11) **EP 2 947 443 B1**
(45) Veröffentlichungstag und Bekanntmachung des Hinweises auf die Patenterteilung: **19.12.2018**
(21) Anmeldenummer: 15165475.3
(22) Anmeldetag: 28.04.2015
(51) Int. Cl.: G01L 7/04

(54) **MANOMETERANORDNUNG**
MANOMETER SYSTEM
SYSTÈME DE MANOMÈTRE

(30) Priorität: 22.05.2014 DE 202014102399 U; 29.07.2014 DE 202014103513 U; 10.03.2015 DE 202015101180 U
(43) Veröffentlichungstag der Anmeldung: 25.11.2015
(73) Patentinhaber: Hans Sasserath GmbH & Co. KG., 41352 Korschenbroich (DE)
(72) Erfinder: Hecking, Willi, 41372 Niederkrüchten-Elmpt (DE)
(74) Vertreter: Weisse, Renate

(56) Entgegenhaltungen:
- CN-U- 201 488 850
- CN-U- 201 903 422
- DE-A1-102004 025 395
- DE-C- 388 687
- KR-A- 20040 033 095

## Beschreibung

### Technisches Gebiet

Die Erfindung betrifft eine Manometeranordnung nach dem Oberbegriff des Anspruchs 1 und eine Armaturenanordnung nach dem Oberbegriff des Anspruchs 11.

Manometer dienen zur Messung und Anzeige des Drucks in einem gasförmigen oder flüssigen System. Dabei kann der Druck als Druckdifferenz gegenüber einem bekannten Druck, etwa Atmosphärendruck ermittelt werden. Es ist aber auch bekannt, den Druck als Absolutdruck zu messen.

### Stand der Technik

Unter dem Begriff Rohrfeder-Manometer ist ein Manometer bekannt, dass typischerweise in Trinkwasser- und Heizungsarmaturen verwendet wird. Das Manometer verwendet eine Rohrfeder mit einer druckabhängigen Längenänderung. Die Längenänderung wird mit eine Zugstange auf ein Zahnrad übertragen. Wenn sich der Druck der Flüssigkeit in der Armatur ändert, dreht sich das Zahnrad. Als Anzeige wird eine kreisrunde Skala verwendet, die auf einer Achse auf der Mittennormalen des Zahnrads angeordnet ist. Das Zahnrad ist mit einem Zeiger verbunden. Der Zeiger folgt der Drehbewegung des Zahnrads und zeigt so den Druck auf der Skala an.

Ein typisches Manometer ist als Steck-Komponente ausgebildet. Es wird in eine zugehörige Öffnung in der Armatur eingesteckt und mit einer Klammer gesichert. Die Öffnung steht mit dem Teil des Innenraums in Verbindung, in dem der Druck gemessen werden soll.

Es gibt Armaturen, in denen der Druck an mehreren Stellen gemessen werden soll. Ein Beispiel ist eine Armatur mit einem Druckminderer. In einer solchen Armatur wird der Eingangsdruck und der Ausgangsdruck gemessen. Ein weiteres Beispiel ist eine Filterarmatur mit einem eingangsseitigen und einem ausgangsseitigen Manometer. Anhand des Druckabfalls an dem Filter kann ermittelt werden, ob der Filter ausgewechselt, gereinigt oder rückgespült werden muss. Auch sogenannte Rohr- oder Systemtrenner verwenden mehrere Manometer, nämlich eingangsseitig, ausgangsseitig und im Bereich der dort vorgesehenen Mitteldruckkammer. Die Messung und Anzeige des Drucks an verschiedenen Stellen ist bei der Funktionsüberwachung solcher Armaturen unerlässlich.

DE 66222 A (Thomson Bros.) offenbart ein Manometer mit zwei Zeigern für verschiedene Druckeinheiten. Die Zeiger drehen sich um die gleiche Achse und zeigen den Druck an einer Messstelle einmal in größeren und einmal in kleineren Druckeinheiten an.

DE 684387 A (Amsler) offenbart eine Meßfeder für Werkstoffprüfmaschinen, bei der zwei Zeiger in einer Skala vorgesehen sind. Es wird nur an einem Messpunkt gemessen.

DE 904 871 (United Shoe Machinery Corp.) offenbart ein Manometer am Oberteil einer Maschine, das zwei Zeiger aufweist, die je den Druck eines Druckmittels in großen und kleinen Zylindern angeben.

DE 562 662 A (Nome) offenbart ein Differential-Druckmesser mit einem Flüssigkeitsmanometer, das zwei Schwimmer auf entsprechenden Flüssigkeitssäulen um einen von den Schwimmern bewegten Zeiger besitzt.

KR 10 2004 0033 095 A offenbart ein Manometer zur Messung des Luftdrucks in unterschiedlichen Bremsleitungen. Die Verbindungen zu den Bremsleitungen werden über Schraubverbindungen hergestellt.

CN 201903422 U zeigt ein Manometer für die Messung von Druck in Gas. Die Manometeranordnung hat nur einen Messpunkt. Ein Zeiger zeigt den höchsten gemessenen Druck an, der andere Zeiger den aktuellen Druck.

### Offenbarung der Erfindung

Es ist Aufgabe der Erfindung, die Druckmessung an Armaturen mit mehreren Messpunkten zu vereinfachen und wirtschaftlicher zu gestalten. Erfindungsgemäß wird die Aufgabe durch eine Manometeranordnung und eine Armaturenanordnung mit den kennzeichnenden Merkmalen des Anspruchs 1 und 11gelöst.

Die Verwendung einer Manometeranordnung mit zwei Manometern für zwei Messpunkte, deren Werte auf einer gemeinsamen Skala angezeigt werden vermeidet eine zweite Skala. Dadurch wird bei der Herstellung weniger Material verbraucht. Es muss ferner nur eine Manometeranordnung installiert werden, statt bisher zwei Manometer. Dadurch wird der Installationsaufwand verringert. Schließlich wird die gesamte Anordnung leichter und kompakter, weil nur eine Skala verwendet wird.

Die durch den Druck oder die Druckänderung in dem Flüssigkeitssystem bei beiden Manometern hervorgerufene Kraft kann mittels eines Zahnrads auf den zugehörigen Zeiger übertragen werden. Es sind aber auch andere Getriebe oder Mittel zur Übertragung der Kraft denkbar. Bei der Verwendung eines Zahnrads kann insbesondere vorgesehen sein, dass
(a) der erste Zeiger mit einem ersten Zahnrad verbunden ist, auf welches die durch den Druck oder die Druckänderung an einer erste Stelle in dem Flüssigkeitssystem hervorgerufene Kraft übertragen wird,
(b) der zweite Zeiger mit einem zweiten Zahnrad verbunden ist, auf welches die durch den Druck oder die Druckänderung an einer zweiten Stelle in dem Flüssigkeitssystem hervorgerufene Kraft übertragen wird, und
(c) die Drehachsen des ersten und des zweiten Zahnrads koaxial zur Mittennnormalen der Skala angeordnet sind.

Bei dieser Anordnung liegen die zwei Zahnräder unabhängig voneinander übereinander. Es versteht sich, dass die Zahnräder auch einen geringeren Winkelbereich als 360° , beispielsweise 180° abdecken können, solange alle auftretenden Druckänderungen berücksichtigt werden können. Die Skala ist auf einem Ziffernblatt oder ähnlichem über den Zahnrädern aufgedruckt. Die Zeiger sind mit dem zugehörigen Zahnrad verbunden. Dreht sich das Zahnrad, verändert sich die Winkellage des Zeigers und zeigt bei geeigneter Justierung den korrekten Druck an. Der zweite Zeiger ist mit dem anderen Zahnrad verbunden. Auch dieser Zeiger verändert seine Winkellage bei Rotation des Zahnrads. Entsprechend zeigt dieser Zeiger auf der gleichen Skala einen Druck an, der dem anderen Messpunkt entspricht. Beide Zahnräder rotieren vollständig unabhängig voneinander.

Die Manometer können insbesondere von Rohrfedermanometern gebildet sein. Dabei kann der Messteil eines handelsüblichen Rohrfedermanometers ohne Zeigerblatt und Zeiger verwendet werden, bei dem die Kraft der Rohrfeder jedes Manometers auf ein Manometer-eigenes Zahnrad übertragen wird, welches in jeweils eines der koaxialen Zahnräder eingreift. Das Zahnrad des einen Manometers greift dann in das anzeigenseitige Zahnrad. Das Zahnrad des anderen Manometers greift in das anzeigenferne Zahnrad. Die Achsen der Zahnräder können, müssen aber nicht auf einer Linie angeordnet sein.

Mit der gemeinsamen Anzeige ist es möglich, dass die Skala kreisförmig verläuft und die Zeiger eine Dicke haben, die derart ausgewählt ist, dass die Zeiger bei einer zulässigen Druckdifferenz zwischen den beiden Messpunkten überlappen und dabei den dazwischenliegenden Teil der Skala verdecken und bei Überschreiten der zulässigen Druckdifferenz den dazwischenliegenden Teil der Skala zeigen. Bei einigen Armaturen darf die Druckdifferenz, d.h. der Druckabfall zwischen zwei Messpunkten einen Grenzwert nicht überschreiten. Der Druckabfall an einem Filter ist beispielsweise ein Maß für die Verschmutzung des Filters. Ein hoher Druckabfall ist ein Hinweis darauf, dass bereits viele Partikel im Filter hängengeblieben sind. Wenn der Druckabfall also einen vorgegebenen Wert überschreitet, soll der Filter rückgespült werden. Die Zeiger haben in Umfangsrichtung eine gewisse Dicke. Die Zeiger sind also nicht schlank und linear ausgebildet, sondern überdecken eine Fläche, die einem Winkelbereich entspricht. Dem Winkelbereich kann ein Druckbereich auf der Skala zugeordnet werden. Wenn beide oder zumindest ein Zeiger derartig flächig ausgebildet ist, überlappen die von den Zeigern abgedeckten Flächen, wenn die Druckdifferenz an den beiden Messpunkten gering ist. Die Zeiger liegen nur um einen geringen Winkel auseinander. Wenn die Druckdifferenz größer als ein Schwellwert ist, überlappen die von den Zeigern abgedeckten Flächen nicht mehr. Dann ist der darunterliegende Bereich des Ziffernblattes und/oder der Skala sichtbar. Es ist also auch ohne Ablesen der Drücke und Differenzbildung sofort erkennbar, ob die Druckdifferenz im zulässigen Bereich liegt oder nicht. Dadurch wird die Handhabung der Anordnung bei der Kontrolle und Wartung stark vereinfacht.

Ausgestaltungen der Erfindung sind Gegenstand der Unteransprüche. Ein Ausführungsbeispiel ist nachstehend unter Bezugnahme auf die beigefügten Zeichnungen näher erläutert.

### Kurze Beschreibung der Zeichnungen

- Fig. 1: ist ein Längsschnitt durch eine Flüssigkeitsarmatur mit zwei Messpunkten zur Messung der Druckverhältnisse.
- Fig. 2: ist ein Querschnitt entlang der Schnittlinie C-C in Figur 1 durch die Flüssigkeitsarmatur aus Figur 1.
- Fig. 3: zeigt die Manometeranordnung für die Flüssigkeitsarmatur in Figur 1 im Detail.

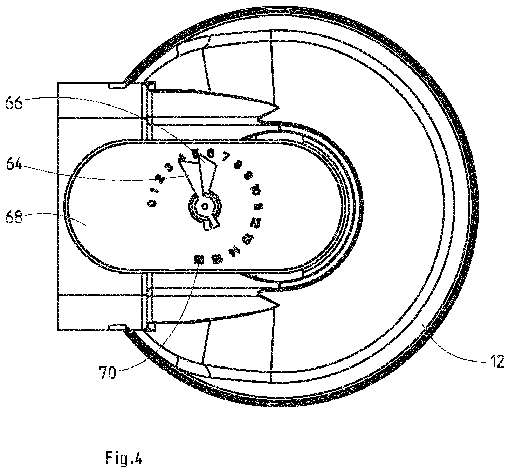

- Fig. 4: ist eine Draufsicht auf die Anordnung aus Figur 1.
- Fig. 5: illustriert, wie die Manometeranordnung auf der Flüssigkeitsarmatur in Figur 1 installiert wird.

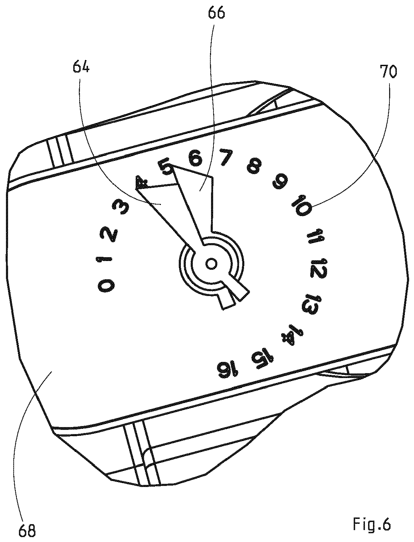

- Fig. 6: zeigt eine Manometeranzeige mit einer Skala, an welcher die Druckverhältnisse an zwei verschiedenen Messpunkten mit zwei Zeigern angezeigt werden.
- Fig.7: ist ein Querschnitt eines Anwendungsbeispiels, bei dem eine Manometeranzeige mit zwei verschiedenen Messpunkten in einem Druckminderer eingesetzt wird.
- Fig.8: ist eine Seitenansicht der Anordnung aus Figur 7.
- Fig.9: ist eine Draufsicht auf die Anordnung aus Figur 7 und 8.
- Fig.10: ist ein Querschnitt eines Anwendungsbeispiels, bei dem eine Manometeranzeige mit zwei verschiedenen Messpunkten in einem Systemtrenner eingesetzt wird.
- Fig.11: ist ein Querschnitt durch die Anordnung aus Figur 10 entlang der dort eingezeichneten Schnittachse G-G.
- Fig.12: zeigt einen Längsschnitt durch alternativen Aufbau mit koaxial angeordneten Manometern.
- Fig.13: ist eine Explosionsdarstellung des Aufbaus aus Figur 12.
- Fig.14: zeigt einen Längsschnitt durch den Aufbau aus Figur 12 entlang einer um 90° verschobenen Schnittebene.
- Fig.15: zeigt die Anordnung aus Figur 14, mit veränderter Zeigerstellung.
- Fig.16: ist eine Draufsicht auf Anordnung aus Figur 12 bis 15 mit Zeiger und Skala.

### Beschreibung der Ausführungsbeispiele

### 1. Ausführungsbeispiel

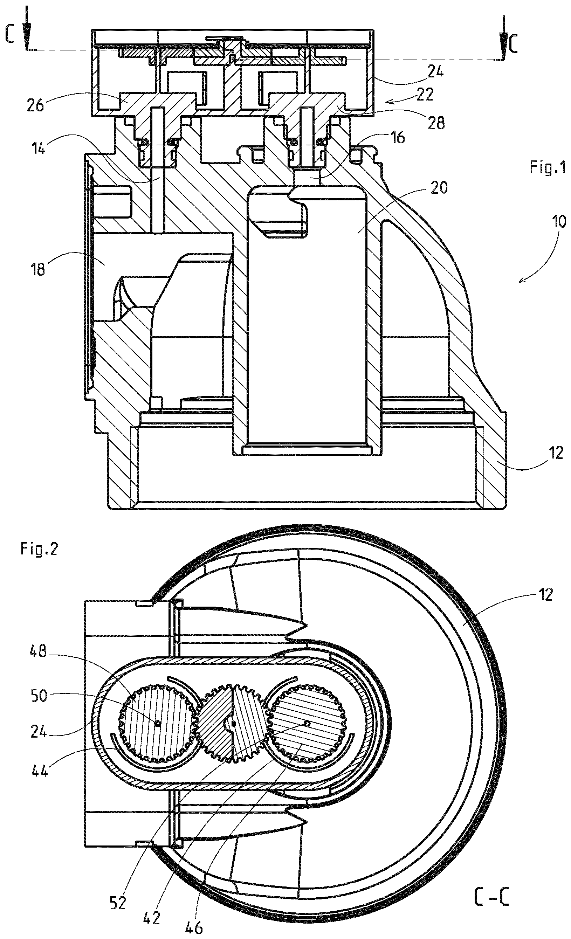

Figur 1 zeigt eine Flüssigkeitsarmatur, die allgemein mit 10 bezeichnet ist. Im vorliegenden Ausführungsbeispiel ist die Flüssigkeitsarmatur ein Trinkwasserfilter mit einer Filtertasse 12. Bei anderen Ausführungsbeispielen ist die Flüssigkeitsarmatur 10 eine Druckminderer-Filterkombination, ein Druckminderer (s.u. Anwendungsbeispiel 1), ein Systemtrenner (s.u. Anwendungsbeispiel 2) oder eine Multifunktionsarmatur zur Detektion von Leckage, Enthärtung von Trink- oder Heizungswasser oder eine Füllkombination für geschlossene Wassersysteme. Die Flüssigkeitsarmatur 10 weist zwei Öffnungen 14 und 16 auf. Im vorliegenden Ausführungsbeispiel ist die Öffnung 14 mit dem Einlass 18 verbunden. Die Öffnung 16 ist im vorliegenden Ausführungsbeispiel mit dem Auslass 20 verbunden. Bei Verwendung eines Systemtrenners kann eine der Öffnungen auch mit der Mitteldruckkammer verbunden sein.

An der Öffnung 14 als erstem Messpunkt kann der Eingangsdruck im Einlass 18 gemessen werden. An der Öffnung 16 als zweitem Messpunkt kann der Ausgangsdruck im Auslass 20 gemessen werden. Die Öffnungen 14 und 16 haben einen definierten Abstand zueinander, so dass eine nachstehend beschriebene Manometeranordnung 22 in die Öffnungen 14 und 16 eingesteckt werden kann.

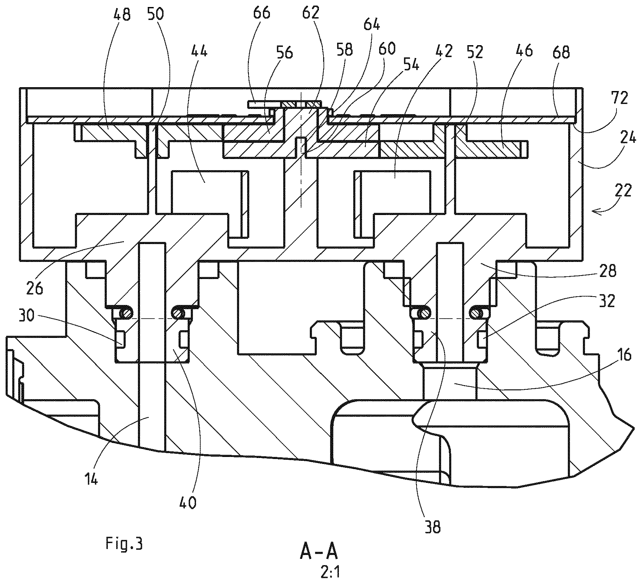

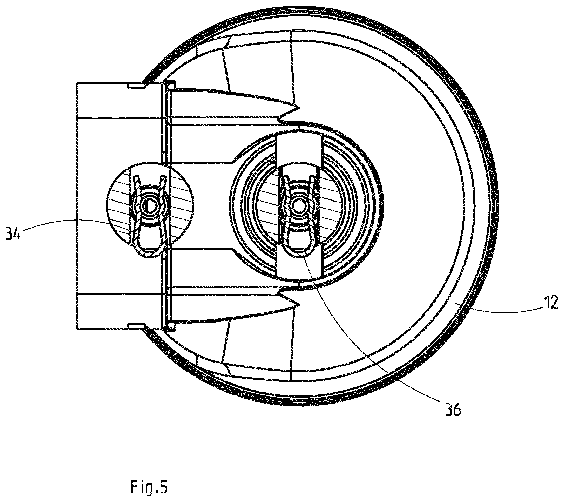

Die Manometeranordnung 22 hat ein langgestrecktes Gehäuse 24. In dem Gehäuse 24 sind zwei Rohrfeder-Manometer 26 und 28 angeordnet. Derartige Rohrfedermanometer werden auch als Bourdonfeder-Manometer bezeichnet. Sie sind allgemein bekannt, so dass hier auf eine Beschreibung der Funktionsweise verzichtet werden kann. Die Manometeranordnung 22 wird mit den Messfühlern 38 und 40 der Rohrfedermanometer 26 und 28 in die Öffnungen 14 und 16 eingesteckt. Jeweils eine Dichtung 30 und 32 am Messfühler 38 und 40 dichtet die Anordnung ab. Dies ist in Figur 3 gut zu erkennen. Die Manometeranordnung 22 ist mit Klammern 34 und 36 gegen Herausziehen aus den Öffnungen 14 und 16 in achsialer Richtung gesichert. Dies ist in Figur 5 gut zu erkennen.

Der Messfühler 38 ist in üblicher Weise mit der Rohrfeder 42 verbunden. Der Messfühler 40 ist mit der Rohrfeder 44 verbunden. Die Rohrfedern 42 und 44 unterliegen bei einer Druckänderung am Messfühler 38 bzw. 40 einer Längenänderung. Diese wird mittels einer Zugstange auf ein Zahnrad übertragen. Die Rohrfeder 42 ist mit einem Zahnrad 46 verbunden. Die Rohrfeder 44 ist mit einem Zahnrad 48 verbunden. Die Drehachsen 50 und 52 der Zahnräder 46 und 48 verlaufen parallel. Im vorliegenden Ausführungsbeispiel verlaufen die Drehachsen 50 und 52 koaxial zu den Öffnungen 14 bzw. 16 und den Messfühlern 38 und 40.

Das Zahnrad 46 greift in ein weiteres Zahnrad 54 und treibt dieses an. Das Zahnrad 54 liegt in der gleichen Ebene wie das Zahnrad 46. Das Zahnrad 48 greift in ein weiteres Zahnrad 56 und treibt dieses an. Das Zahnrad 56 liegt in der gleichen Ebene wie das Zahnrad 48. Das Zahnrad 54 und das Zahnrad 56 rotieren um eine gemeinsame Achse 58. Dabei liegt das Zahnrad 56 frei drehbar auf dem Zahnrad 54 auf. Das Zahnrad 54 ist auf einem Pin 60 drehbar gelagert. Der Pin 60 ist innen und mittig am Boden des Manometergehäuses 24 angeformt. An der Oberseite des Zahnrads 54 ist ein Zapfen 62 angeformt. Auf dem Zapfen 62 ist das Zahnrad 56 drehbar gelagert. Das Zahnrad 54 ist mit einem ersten Zeiger 64 verbunden. Das Zahnrad 56 ist mit einem Zeiger 66 verbunden. Zwischen den Zeigern 64 und 66 und dem Zahnrad 56 ist ein Anzeigeblatt 68 mit einer Skala 70 angeordnet. Das Anzeigeblatt 68 liegt auf einer Gehäusekante 72 auf der Innenseite der Gehäusewandung auf. Durch die langgestreckte Form des Gehäuses 24 hat auch das Anzeigeblatt 68 eine langgestreckte Form und kann nicht rotieren. Die Skala 70 ist auf einem Kreis angeordnet.

Im vorliegenden Ausführungsbeispiel liegen die Drehachsen der Zahnräder 46, 48 und 54 bzw. 56 auf einer Linie. Dies ist in Figur 2 zu erkennen. Es versteht sich, dass je nach Anordnung der Öffnungen in der Wasserarmatur auch eine andere Anordnung möglich ist.

Die beschriebene Anordnung arbeitet wie folgt:
Jeder Druck an einem Messpunkt entspricht einer bestimmten Ausdehnung der Rohrfeder. Wenn sich der Druck verändert, ändert sich die Ausdehnung der Rohrfeder 42 bzw. 44. Die Längenänderung wird über eine Zugstange auf das zugehörige Zahnrad 46 bzw. 48 des Manometers übertragen. Das Zahnrad 46 treibt das Zahnrad 54 an. Der mit dem Zahnrad 54 verbundene Zeiger 64 wird bewegt. In gleicher Weise wird durch eine Druckänderung am Messfühler 40 der Zeiger 66 bewegt. Die Skala 70 ist in geeigneter Weise geeicht, so dass dort der Zeiger den korrekten Druck anzeigt. Man erkennt, das nur eine Skala 70 für beide Zeiger 64 und 66 verwendet wird.

Die Zeiger 64 und 66 haben im Bereich der Skala im wesentlichen eine Dreiecksform. Eine Spitze zeigt nach außen. Diese zeigt den Druck am Messfühler an. Die von den Zeigern 64 und 66 abgedeckte Fläche überlappt bei kleinen Druckdifferenzen. Dann ist der Bereich des Anzeigeblatts 68 zwischen den Zeigern nicht zu sehen. Wenn die Druckdifferenz einen Schwellwert überschreitet, dann gehen die Zeiger soweit auseinander, dass der Bereich des Anzeigeblatts 68 sichtbar wird. Die Dreieckswinkel bzw. -flächen werden so gewählt, dass sie der zulässigen Druckdifferenz entsprechen. Es ist dann unabhängig von den gemessenen Absolutdrücken leicht erkennbar, ob der Druckabfall in der Wasserarmatur den zulässigen Grenzwert überschreitet oder nicht.

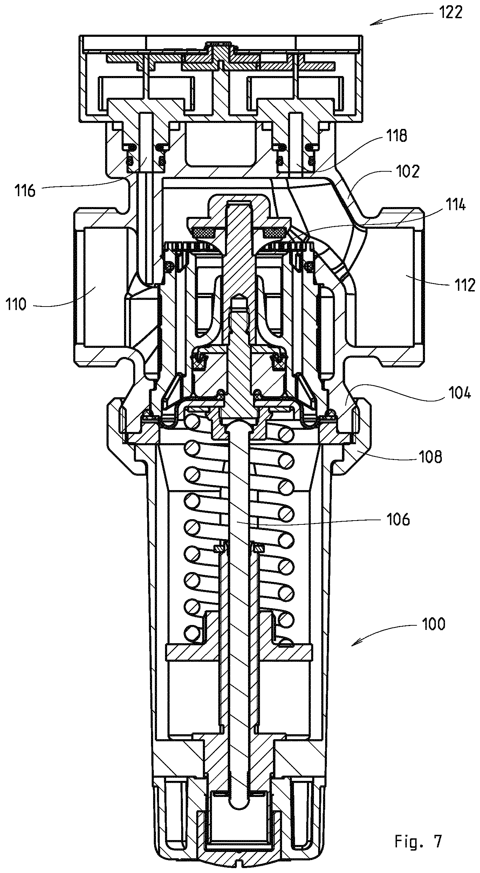

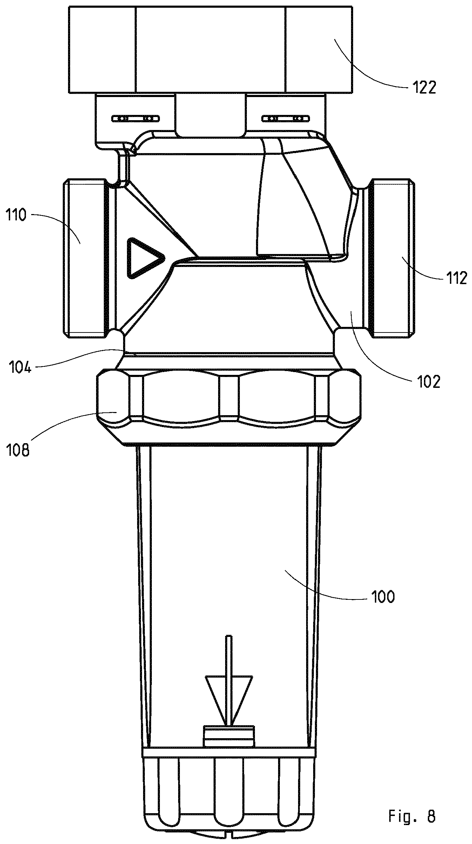

### 2. Ausführungsbeispiel (Anwendungsbeispiel Fig.7-9)

Figur 7 zeigt ein Anwendungsbeispiel, bei dem die Wasserarmatur ein Druckminderer ist. Der Druckminderer üblicher Bauart ist in der Darstellung mit 100 bezeichnet. Der Druckminderer 100 ist als Einsatz 106 ausgebildet, der in einen Gehäusestutzen 104 eines Gehäuses 102 eingesetzt ist. Der Einsatz 106 wird mit einer Mutter 108 am Gehäusestutzen 104 befestigt. Das Gehäuse 102 weist einen Einlass 110 und einen Auslass 112 auf. Zwischen Einlass 110 und Auslass 112 ist das Druckmindererventil 114 angeordnet. Bei einem auslassseitigen Druckabfall öffnet das Druckmindererventil 114 und Wasser fließt nach. Der auslassseitige Druck kann mit dem Druckminderer auf einen gewünschten Wert eingestellt werden.

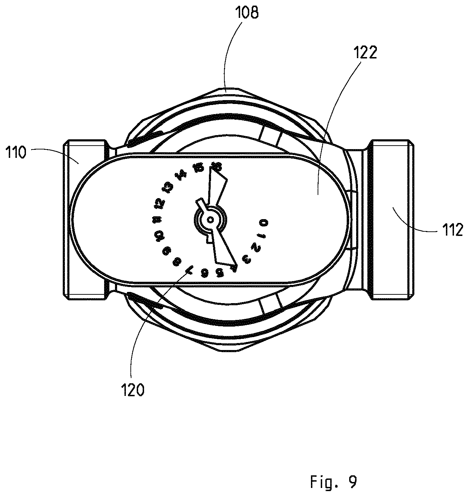

Zur Kontrolle der Druckverhältnisse wird ein eingangs beschriebenes Doppelmanometer 122 verwendet. Das Doppelmanometer 122 hat einen ersten Messpunkt 116, der mit dem Einlass 110 verbunden ist und einen zweiten Messpunkt 118, der mit dem Auslass verbunden ist. In der Draufsicht in Figur 9 ist gut zu erkennen, dass beide Drücke auf einer Anzeige mit nur einer Skala 120 angezeigt werden. Im übrigen entspricht der Druckminderereinsatz 106 bekannten Anordnungen, die von der Anmelderin seit langem vertrieben werden und braucht daher hier nicht näher beschrieben werden.

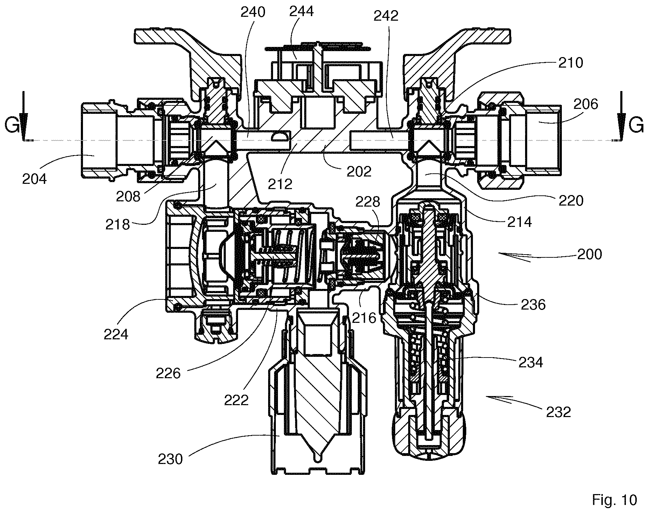

### 3. Ausführungsbeispiel (Anwendungsbeispiel Fig. 10-11)

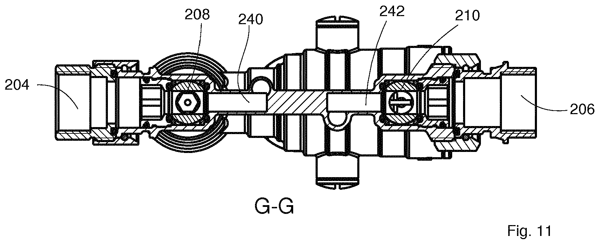

Figuren 10 und 11 zeigen ein weiteres Anwendungsbeispiel, bei dem die allgemein mit 200 bezeichnete Wasserarmatur ein Systemtrenner mit Druckminderer ist. Die Wasserarmatur 200 weist einen oberen Gehäuseteil 202 auf. Der obere Gehäuseteil hat einen Einlass 204 und einen koaxialen Auslass 206. Hinter dem Einlass 204 ist eine erste Absperrung 208 in Form eines Kugelhahns angeordnet. Vor dem Auslass 206 ist eine zweite Absperrung 210 in Form eines Kugelhahns angeordnet. Einlass 204 und Auslass 206 sind mit einer nicht-strömungführenden Verbindung 212 verbunden.

Im Bereich unterhalb der Kugelhähne 208 und 210 ist ein unterer Gehäuseteil 214 angeformt. Der untere Gehäuseteil 214 hat einen parallel zur Verbindung 212 verlaufenden, im wesentlichen rohrförmigen Gehäusekörper 216. Der Gehäusekörper 216 weist auf der Oberseite Kanäle 218 und 220 auf, welche im oberen Gehäuseteil münden.

Der Gehäusekörper 216 weist einen seitlichen, horizontalen Gehäusestutzen 222 auf. Der Stutzen 222 fluchtet mit der Längsachse des Gehäusekörpers 216. Durch den mit einem Verschluss 224 verschließbaren Stutzen 222 ist eine Systemtrenneranordnung in den Gehäusekörper 216 eingesetzt. Die Systemtrenneranordnung weist einen stromaufwärtigen Rückflussverhinderer 226 und einen stromabwärtigen Rückflussverhinderer 228. Zwischen den Rückflussverhinderern 226 und 228 ist eine Mitteldruckkammer gebildet. Ein Auslassventil öffnet und Wasser, welches durch einen eventuell undichten, stromabwärtigen Rückflussverhinderer 216 zurückfließt, fließt durch das Auslassventil auf der Unterseite des Gehäusekörpers 216 und einen Ablauftrichter 230 nach außen ab. Im übrigen arbeitet der Systemtrenner wie bekannte Systemtrenner, die von der Anmelderin seit langem vertrieben werden und braucht daher hier nicht näher erläutert werden.

Stromabwärts zu dem Systemtrenner ist ein Druckminderer angeordnet, der allgemein mit 232 bezeichnet ist. Der Druckminderer umfasst wie der Druckminderer 100 des ersten Anwendungsbeispiels einen Einsatz 234, der in einen Stutzen 236 eingesetzt ist. Der Stutzen 236 erstreckt sich auf der Unterseite des Gehäusekörpers 216 nach unten und koaxial zum Kanal 220 und zm Kugelhahn 210. Wenn der Systemtrenner oder der Druckminderer gewartet werden müssen, dann werden einfach die Kugelhähne geschlossen und die Bauteile im Gehäusekörper 216 sind durch die Stutzen leicht und ohne Aufbrechen der Installation zugänglich.

Es ist leicht zu erkennen, dass Wasser vom Einlass 204 am Kugelhahn 208 nach unten in den Kanal 218 abgelenkt wird. Wasser wird ferner vom Kanal 220 durch den Kugelhahn 210 zum Auslass 206 abgelenkt. Jeweils eine "Sackgasse" führt als Kanal 240 und 242 gerade durch den Kugelhahn 208 bzw. 210 bis zur nicht-strömungsführende Verbindung 212. In diesen Kanälen 240 und 242 befinden sich zwei Druck-Messpunkte für ein oben beschriebenes Doppelmanometer 244. Auf diese Weise können die Drücke der vergleichsweise weit auseinanderliegenden Messpunkte Einlass und Auslass mit einem Doppelmanometer 244 auf die oben beschriebene Weise erfasst werden. Dies ist auch in Figur 11 gut zu erkennen. Das Doppelmanometer 244 zeigt sowohl den Einlassdruck, als auch den Auslassdruck in einer Anzeige mit nur einer Skala an. Es liegt platzsparend zwischen den Griffen der Kugelhähne 208 und 210.

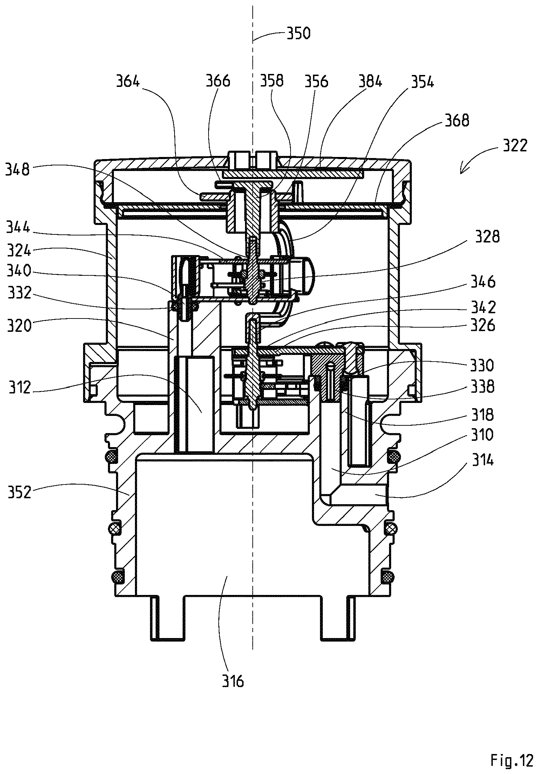

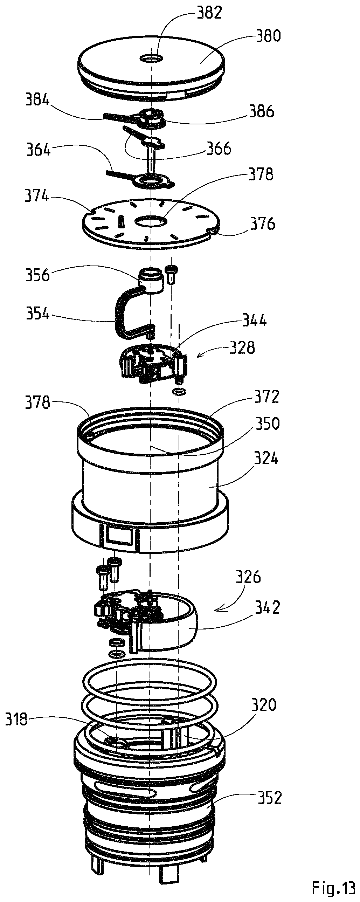

### 4.Ausführungsbeispiel (Alternative Konfiguration Fig. 12 bis 16)

Die vorstehend beschriebenen Manometer übertragen Drehmomente auf die Zeiger mittels Zahnrädern. Dabei tritt immer ein gewisses Spiel auf. Die in Figuren 12 bis 16 dargestellte Konfiguration eines Doppelmanometers verwendet daher zwei Manometer 326 und 328 mit einer gemeinsamen Drehachse 350.

Die alternative Manometeranordnung 322 hat ein in axialer Richtung langgestrecktes Gehäuse mit zwei Teilen 324 und 352 aus Kunststoff. Das obere Gehäuseteil 324 ist auf das untere Gehäuseteil 350 aufgesteckt und mit einer Ringdichtung abgedichtet.

In dem Gehäuse 324 und 350 sind koaxial zwei Rohrfeder-Manometer 326 und 328 angeordnet. Die Rohrfedermanometer 326 und 328 entsprechen den oben beschriebenen Manometern, so dass hier auf eine Beschreibung von Aufbau und Funktionsweise verzichtet werden kann.

Der untere Gehäuseteil bildet zwei Kanäle. Ein erster Kanal 310 führt durch einen nach oben in Figur 12 ragenden Stutzen 318 und ist L-förmig ausgebildet. Das untere Ende des Kanals 310 mündet in einer seitlichen Öffnung 314 im unteren Gehäuseteil 352. Der untere Gehäuseteil 352 ist nach unten offen. Die dadurch gebildete Öffnung 316 ist mit einem zweiten Kanal 312 verbunden. Der Kanal 312 erstreckt sich gerade durch einen nach oben ragenden Stutzen 320 nach oben. Dabei hat der untere Teil des Kanals 312 einen vergrößerten Durchmesser, so dass weniger Material verbraucht wird. Die Kanäle 310 und 312 sind in Figur 12 gut zu erkennen.

Der Stutzen 320 ragt weiter nach oben als der parallele, seitlich daneben und beabstandet angeordnete Stutzen 318. Der erste Kanal 310 ist über die Öffnung 314 mit einem ersten Druckraum (nicht dargestellt) verbunden. Der zweite Kanal 312 ist über die Öffnung 316 mit einem zweiten Druckraum (nicht dargestellt) verbunden. Die Druckräume sind beispielsweise Einlass und Mitteldruckkammer eines Systemtrenners oder Einlass und Auslass eines Filters.

Das Manometer 326 wird mit einem Messfühler 338 in das oben offene Ende des Kanals 310 eingesteckt. Es ist damit etwa auf der Höhe der Verbindungsebene des oberen 324 und unteren Gehäuseteils 352 angeordnet. Eine Dichtung 330 am Messfühler dichtet die Anordnung ab.

Das Manometer 328 wird mit einem Messfühler 340 in das oben offene Ende des Kanals 312 eingesteckt. Es ist oberhalb der Verbindungsebene des oberen 324 und unteren Gehäuseteils 352 angeordnet. Eine Dichtung 332 am Messfühler 332 dichtet die Anordnung ab.

Der Messfühler 338 ist in üblicher Weise mit der Rohrfeder 342 verbunden. Der Messfühler 340 ist mit der Rohrfeder 344 verbunden. Die Rohrfedern 342 und 344 unterliegen bei einer Druckänderung am Messfühler 338 bzw. 340 einer Längenänderung. Diese wird mittels einer Zugstange auf jeweils eine Spindel 346 bzw. 348 übertragen. Die Drehachsen 350 der Spindeln 346 und 348 verlaufen koaxial. Dabei ist die Spindel 348 des Manometers 328 oberhalb der Spindel 346 des Manometers 326 angeordnet.

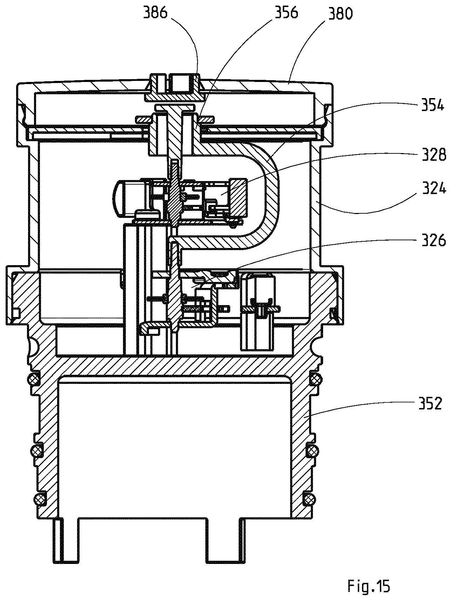

Die untere Spindel 346 ist am oberen Ende fest und ohne Spiel mit einem Bügel 354 verbunden. Der Bügel ist um eine horizontale Achse gekrümmt. Das untere Ende ist mit der Spindel 346 verbunden. Das obere Ende des Bügels 354 ist mit einem hohlzylindrischen Rotationskörper 356 verbunden. An dem Rotationskörper 356 ist ein erster Zeiger 364 befestigt. Der Bügel 354 ist gut in Figur 15 zu erkennen.

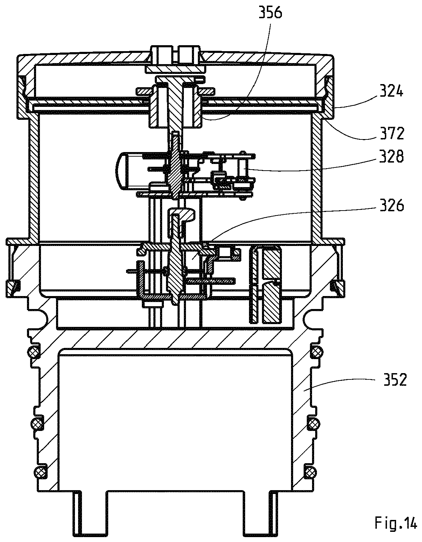

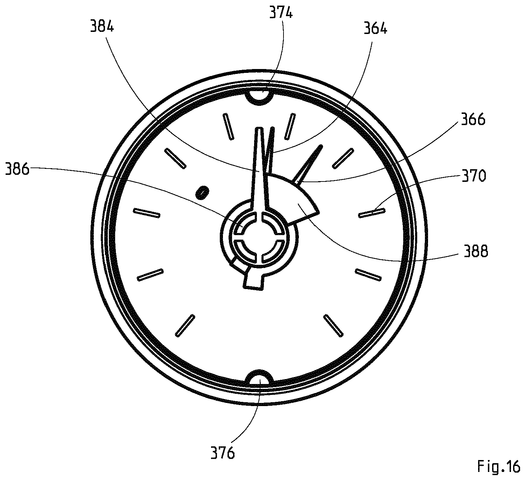

Die obere Spindel 348 ist am oberen Ende fest mit einem stabförmigen Rotationskörper 358 verbunden. An dem Rotationskörper 358 ist ein zweiter Zeiger 366 befestigt. Der Rotationskörper 358 erstreckt sich längs durch den hohlzylindrischen Rotationskörper 356. Ein kreisförmiges Anzeigeblatt 368 mit einer Skala 370 ist unterhalb der Zeiger 364 und 366 angeordnet. Das Anzeigeblatt 368 liegt auf einer Gehäusekante 372 auf der Innenseite der Gehäusewandung auf. Die Gehäusekante 372 ist in Figur 14 erkennbar. Die Skala 370 ist auf einem Kreis angeordnet. Das Anzeigeblatt 368 hat zwei Ausbuchtungen 374 und 376. Diese sind in Figur 16 zu erkennen. Die Ausbuchtungen 374 und 376 greifen um Vorsprünge 378 auf an der Gehäusekante 372. Auf diese Weise wird das Anzeigeblatt 368 mit korrekter Orientierung der aufgedruckten Skala eingesetzt. Der hohlzylindrische Rotationskörper 356 erstreckt sich durch eine Mittenöffnung 378 im Anzeigeblatt 368.

Ein durchsichtiger Deckel 380, beispielsweise aus Plexiglas, ist von oben in den oberen Gehäuseteil 324 eingeklipst. Der Deckel 380 ist mit einer Mittenöffnung 382 versehen. In die Mittenöffnung 382 ist von unten ein Zeiger 384 eingeklipst. Zu diesem Zweck weist der Zeiger 384 am inneren Ende eine Platte mit vier kreisförmig angeordneten, beabstandeten Vorsprüngen 386 auf, die in die Öffnung 382 eingeklipst werden. An dem Zeiger 384 ist ein beispielsweise grünes Winkelsegment 388 angeformt. Der Winkel des Winkelsegments 388 ist derart ausgewählt, dass es dem Toleranzbereich für die Druckdifferenz entspricht, wenn der Zeiger 384 auf einen ausgewählten Minimaldruck eingestellt ist. Der Zeiger 384 ist im übrigen unbeweglich.

Die beschriebene Anordnung arbeitet wie folgt:
Jeder Druck an einem Messpunkt entspricht einer bestimmten Ausdehnung der Rohrfeder. Wenn sich der Druck verändert, ändert sich die Ausdehnung der Rohrfeder 342 Die Längenänderung wird auf die Spindel 346 des Manometers übertragen. Dabei wird der verbundene Zeiger 364 mitbewegt. In gleicher Weise wird durch eine Druckänderung am Messfühler 340 der Zeiger 366 bewegt. Die Skala 370 ist in geeigneter Weise geeicht, so dass dort der Zeiger den korrekten Druck anzeigt. Man erkennt, dass auch bei diesem Ausführungsbeispiel nur eine Skala 370 für beide Zeiger 364 und 366 verwendet wird.

Das hier beschriebene Ausführungsbeispiel arbeitet ohne Zahnräder. Der Zeiger ist jeweils fest mit der Spindel des Manometers verbunden. Dadurch arbeitet die Anordnung praktisch ohne Spiel. Die koaxiale Anordnung der Manometer ermöglicht es, die Anordnung in quasi beliebigen Gehäusen zu verwenden, ohne, dass wie bei obigen Beispielen, ein vorgegebenes Stichmaß eingehalten werden muss.

Die Erfindung wurde vorstehend anhand eines konkreten Ausführungsbeispiels beschrieben. Es versteht sich, dass eine Vielzahl von Abwandlungen des Ausführungsbeispiels möglich ist ohne vom Erfindungsgedanken abzuweichen. So kann die Erfindung an unterschiedlichen Wasserarmaturen verwirklicht werden. Insbesondere beziehen sich die Begriffe "oben" und "unten" lediglich auf die beigefügten Zeichnungen und beschränken die Ausrichtung der Anordnung nicht. Die Anordnung der Zahnräder und Übertragungselemente kann in beliebiger Weise erfolgen, solange beide Zeiger die gleiche Skala verwenden. Auch andere Mittel zur Kraftübertragung auf die Zeiger sind geeignet.

## Patentansprüche

1. Manometeranordnung (22; 122; 244; 322) zur Funktionsüberwachung einer Flüssigkeitsarmatur (10; 100) die ein Druckminderer (106), ein Filter (12), ein Rohr- oder Systemtrenner, eine Druckminderer-Filterkombination, eine Multifunktionsarmatur zur Detektion von Leckage und Enthärtung von Trink- oder Heizungswasser, eine Füllkombination für geschlossene Wassersysteme oder ein Systemtrenner mit Druckminderer (200) oder eine andere Flüssigkeitsarmatur ist; wobei die Flüssigkeitsarmatur zwei Öffnungen (14; 16) aufweist, von denen die erste Öffnung (14) mit einem ersten Messpunkt (116) an einer ersten Stelle in der Flüssigkeitsarmatur und die zweite Öffnung (16) mit einem zweiten Messpunkt (118) an einer weiteren Stelle in der Flüssigkeitsarmatur verbunden ist,
enthaltend
(a) ein erstes Manometer (26; 326) mit einem ersten Messfühler (38), bei dem eine durch Druck oder Druckänderung im dem ersten Messpunkt (116) hervorgerufene Kraft auf einen Zeiger (64; 364) übertragen wird und der Zeiger (64; 364) den Druck oder die Druckänderung an einer Skala (70; 120; 370) anzeigt, und
(b) ein weiteres Manometer (28; 328) zur Erfassung eines Drucks oder einer Druckänderung in dem zweiten Messpunkt (118) in der Flüssigkeitsarmatur (10; 100), dessen Kraft auf einen weiteren Zeiger (66; 366) übertragen wird,
(c) der weitere Zeiger (66; 366) den Druck oder die Druckänderung an der gleichen Skala (70; 120; 370) anzeigt; und
**dadurch gekennzeichnet, dass**
(d) die Manometeranordnung (22; 122; 244; 322) mit dem ersten (26; 326) und dem weiteren Manometer (28; 328) in einem Gehäuse (24; 324) angeordnet ist, das als Steck-Komponente ausgebildet ist und mit den Messfühlern (38, 40) der Manometer (26, 28; 326, 328) in die zugehörigen Öffnungen (14, 16) in der Armatur (10) einsteckbar ist.

2. Manometeranordnung nach Anspruch 1, **dadurch gekennzeichnet, dass** die Manometer (26, 28; 122; 244; 326, 328) von Rohrfedermanometern gebildet sind.

3. Manometeranordnung nach Anspruch 1 oder 2, **dadurch gekennzeichnet, dass** der erste und der zweite Zeiger (64, 66; 364, 366) um eine gemeinsame Drehachse (58; 350) drehbar angeordnet sind.

4. Manometeranordnung nach Anspruch 3, **dadurch gekennzeichnet, dass** die Skala (70; 120) kreisförmig verläuft und die Zeiger (64, 66; 364, 366) eine Dicke haben, die derart ausgewählt ist, dass die Zeiger (64, 66; 364, 366) bei einer zulässigen Druckdifferenz zwischen den beiden Messpunkten (116, 118) überlappen und dabei den dazwischenliegenden Teil der Skala (70; 120; 370) verdecken und bei Überschreiten der zulässigen Druckdifferenz den dazwischenliegenden Teil der Skala (70; 120; 370) zeigen.

5. Manometeranordnung nach einem der vorgehenden Ansprüche, **dadurch gekennzeichnet, dass**
(a) beide Manometer (326, 328) koaxial unterhalb der Skala (370) angeordnet sind, und
(b) die Rotation des unteren Manometers (326) mittels eines Übertragungselements (354) auf den zugehörigen Zeiger (364) übertragen wird, wobei das Übertragungselement steif mit dem Manometer (326) und dem Zeiger (364) verbunden ist.

6. Manometeranordnung nach Anspruch 5, **dadurch gekennzeichnet, dass** das Übertragungselement von einem Bügel (354) gebildet ist, der sich um das zwischen unterem Manometer (326) und Skala (370) liegende obere Manometer (328) herum erstreckt.

7. Manometeranordnung nach einem der vorgehenden Ansprüche, **dadurch gekennzeichnet, dass** einer der Zeiger (366) mit einer in der Drehachse (350) liegenden Welle oder Spindel und der andere Zeiger (364) mit einem drehbar um die Drehachse (350) herum gelagerten Zylinder (356) verbunden ist.

8. Manometeranordnung nach einem der vorgehenden Ansprüche 1 bis 4 , **dadurch gekennzeichnet, dass** die durch den Druck oder die Druckänderung in dem Flüssigkeitssystem bei beiden Manometern hervorgerufene Kraft mittels eines Zahnrads (46, 48, 54, 56) auf den zugehörigen Zeiger (64, 66) übertragen wird.

9. Manometeranordnung nach Anspruch 8, **dadurch gekennzeichnet, dass**
(a) der erste Zeiger (64) mit einem ersten Zahnrad (54) verbunden ist, auf welches die durch den Druck oder die Druckänderung an einer erste Stelle (14; 116) in dem Flüssigkeitssystem hervorgerufene Kraft übertragen wird,
(b) der zweite Zeiger (66) mit einem zweiten Zahnrad (56) verbunden ist, auf welches die durch den Druck oder die Druckänderung an einer zweiten Stelle (16; 118) in dem Flüssigkeitssystem hervorgerufene Kraft übertragen wird, und
(c) die Drehachsen des ersten und des zweiten Zahnrads (54, 56) koaxial zur Mittennnormalen der Skala (70; 120) angeordnet sind.

10. Manometeranordnung nach Anspruch 2 und 9, **dadurch gekennzeichnet, dass** die Kraft der Rohrfeder (42, 44) jedes Manometers (26, 28) auf ein Manometer-eigenes Zahnrad (46, 48) übertragen wird, welches in jeweils eines der koaxialen Zahnräder (54, 56) eingreift.

11. Armaturenanordnung enthaltend
(a) eine Flüssigkeitsarmatur (10; 100) mit einem Druckminderer (106), mit einem Filter (12), mit einem Rohr- oder Systemtrenner, mit einer Druckminderer-Filterkombination, mit einer Multifunktionsarmatur zur Detektion von Leckage und Enthärtung von Trink- oder Heizungswasser, mit einer Füllkombination für geschlossene Wassersysteme oder mit einem Systemtrenner mit Druckminderer (200) oder eine andere Flüssigkeitsarmatur wobei die Flüssigkeitsarmatur zwei Öffnungen aufweist, von denen die erste Öffnung mit einem ersten Messpunkt an einer ersten Stelle in der Flüssigkeitsarmatur und die zweite Öffnung mit einem zweiten Messpunkt an einer zweiten Stelle in der Flüssigkeitsarmatur verbunden ist; und
(b) eine Manometeranordnung (22; 122; 244; 322) nach einem der vorgehenden Ansprüche.

## Claims

1. Manometer assembly (22; 122; 244; 322) for controlling the function of a liquid fitting (10; 100) which is a pressure reducer (106), a filter (12), a pipe- or system disconnector, a pressure-reducer-filter-combination, a multifunctional fitting for the detection of leakage and descaling of drinking- or heating water, a filling fitting for closed water systems or a system disconnector (200) or another liquid fitting; wherein the liquid fitting comprises two openings (14; 16) the first of such openings (14) is connected to a first measuring point (116) at a first point in the liquid fitting and the second of such openings (16) is connected to a second measuring point in the liquid fitting at a different point, comprising
(a) a first manometer (26; 326) with a first probe (38) where the force caused by pressure or a pressure change at the first measuring point (116) is transferred to a pointer (64; 364) and the pointer (64; 364) indicates the pressure or the pressure change at a scale (70; 120; 370), and
(b) a further manometer (28; 328) for detecting a pressure or a pressure change at a second measuring point (118) in the liquid fitting (10; 100), causing a force which is transferred to a further pointer (66; 366),
(c) the further pointer (66; 366) indicates the pressure or the pressure change at the same scale (70; 120; 370); and
**characterized in that**
(d) the manometer assembly (22; 122; 244; 322) with the first (26; 326) and the further manometer (28; 328) is arranged in a housing (24; 324) which is designed as a plug-in component and adapted to be inserted with the probes (38, 40) of the manometers (26, 28; 326, 328) into the corresponding openings (14, 16) in the fitting (10).

2. Manometer assembly according to claim 1, **characterized in that** the manometer (26, 28; 122; 244; 326, 328) are formed by Bourdon gauges.

3. Manometer assembly according to claim 1 or 2, **characterized in that** the first and the second pointer (64, 66; 364, 366) are rotatable about a common rotational axis (58; 350).

4. Manometer assembly according to claim 3, **characterized in that** the scale (70; 120) is circular and the pointers (64, 66; 364, 366) have a width which is selected such that the pointers (64, 66; 364, 366) will overlap at a admissible pressure difference between the two measuring points (116, 118) and cover the portion of the scale in-between (70; 120; 370) and reveal the portion of the scale in-between (70; 120; 370) upon exceeding the admissible pressure difference.

5. Manometer assembly according to any of the preceding claims, **characterized in that**
(a) both manometers (326, 328) are coaxially arranged below the scale, and
(b) the rotation of the lower manometer (326) is transferred to the corresponding pointer (364) by means of a transferring element (354), wherein the transferring element is stiffly connected to the manometer (326) and the pointer (364).

6. Manometer assembly according to claim 5, **characterized in that** the transferring element is formed by a bracket (354) extending around the upper manometer (328) which is positioned between the lower manometer (326) and the scale (370).

7. Manometer assembly according to any of the preceding claims, **characterized in that** one of the pointers (366) is connected to a shaft or spindle in the rotational axis (350) and the other pointer (364) is connected to a cylinder (356) which is pivot-mounted about the rotational axis (350).

8. Manometer assembly according to any of the preceding claim 1 to 4, **characterized in that** the force generated by the pressure or the pressure change in the liquid system is transferred by means of a gear wheel (46, 48, 54, 56) to the corresponding pointer (64, 66).

9. Manometer assembly according to claim 8, **characterized in that**
(a) the first pointer (64) is connected to a first gear wheel (54), adapted to receive the force generated by the pressure or the pressure change at a first point (14; 116) in the liquid system,
(b) the second pointer (66) is connected to a second gear wheel (56), adapted to receive the force generated by the pressure or the pressure change a a second point (16; 118) in the liquid system, and
(c) the rotational axes of the first and the second gear wheel (54, 56) are coaxially arranged with respect to the central normal of the scale (70; 120).

10. Manometer assembly according to claim 2 and 9, **characterized in that** the force of the bourdon tube (42, 44) of each manometer (26, 28) is transferred to an individual gear wheel (46, 48) engaging in one of the coaxial gear wheels (54, 56).

11. Fitting assembly, comprising
(a) a liquid fitting (10; 100) with a pressure reducer (106), with a filter (12), with a pipe- or system disconnector, with a pressure-reducer-filter-combination, with a multifunctional fitting for the detection of leakage and descaling of drinking- or heating water, with a filling fitting for closed water systems or with a system disconnector (200) or with another liquid fitting; wherein the liquid fitting comprises two openings wherein the first of such openings is connected to a first measuring point at a first point in the liquid fitting and the second of such openings is connected to a second measuring point in the liquid fitting at a different point, and
(b) a manometer assembly (22; 122; 244; 322) according to any of the preceding claims.

## Revendications

1. Disposition de manomètre (22 ; 122 ; 244 ; 322) destinée à la surveillance du fonctionnement d'une pièce de robinetterie pour liquide (10 ; 100) qui est un réducteur de pression (106), un filtre (12), un disconnecteur de tuyaux ou de système, un combiné filtre-réducteur de pression, une pièce de robinetterie multifonctionnelle destinée à la détection de fuites et à l'adoucissement de l'eau potable ou de l'eau de chauffage, un dispositif de remplissage combiné pour systèmes d'eau fermés ou un disconnecteur de système à réducteur de pression (200) ou toute autre pièce de robinetterie pour liquide, la pièce de robinetterie pour liquide présentant deux orifices (14 ; 16) dont le premier orifice (14) est connecté à un premier point de mesure (116) à un premier endroit situé dans la pièce de robinetterie pour liquide et le second orifice (16) est connecté à un second point de mesure (118) à un autre endroit situé dans la pièce de robinetterie pour liquide, comprenant
(a) un premier manomètre (26 ; 236) muni d'un premier capteur de mesure (38) pour lequel une force provoquée par la pression ou le changement de pression au premier point de mesure (116) est transmise à l'aiguille (64 ; 364) et l'aiguille (64 ; 364) indique la pression ou le changement de pression sur une échelle graduée (70 ; 120 ; 370), et
(b) un autre manomètre (28 ; 328) destiné à saisir une pression ou un changement de pression au second point de mesure (118) situé dans la pièce de robinetterie pour liquide (10 ; 100) dont la force est transmise à une autre aiguille (66 ; 366),
(c) l'autre aiguille (66 ; 366) indique la pression ou le changement de pression sur la même échelle graduée (70 ; 120 ; 370) ; et
**caractérisée en ce que**
(d) la disposition de manomètre (22 ; 122 ; 244 ; 322) est disposée avec le premier manomètre (26 ; 236) et l'autre manomètre (28 ; 328) dans un boîtier (24 ; 324) qui est configuré sous forme de composant enfichable et peut être enfiché avec les capteurs de mesure (38, 40) des manomètres (26, 28 ; 326, 328) dans les orifices associés (14, 16) situés dans la pièce de robinetterie (10).

2. Disposition de manomètre selon la revendication 1, **caractérisée en ce que** les manomètres (26, 28 ; 122 ; 244 ; 326, 328) sont formés de manomètres à tube de Bourdon.

3. Disposition de manomètre selon la revendication 1 ou 2, **caractérisée en ce que** la première et la seconde aiguille (64, 66 ; 364, 366) sont disposées de manière à pouvoir tourner autour d'un axe de rotation commun (58 ; 350).

4. Disposition de manomètre selon la revendication 3, **caractérisée en ce que** l'échelle graduée (70 ; 120) s'étend circulairement et les aiguilles (64, 66 ; 364, 366) présentent une épaisseur choisie de sorte que les aiguilles (64, 66 ; 364, 366) se superposent en cas de différence de pression autorisée entre les deux points de mesure (116, 118) en recouvrant la partie de l'échelle graduée (70 ; 120 ; 370) située entre les deux et indiquent la partie de l'échelle graduée (70 ; 120 ; 370) située entre les deux en cas de dépassement de la différence de pression autorisée.

5. Disposition de manomètre selon l'une quelconque des revendications précédentes, **caractérisée en ce que**
(a) les deux manomètres (326, 328) sont disposés sur un même axe en dessous de l'échelle graduée (370), et
(b) la rotation du manomètre inférieur (326) est transmise à l'aiguille associée (364) au moyen d'un élément de transmission (354), l'élément de transmission étant solidaire du manomètre (326) et de l'aiguille (364).

6. Disposition de manomètre selon la revendication 5, **caractérisée en ce que** l'élément de transmission est formé d'un arceau (354) qui s'étire autour du manomètre supérieur (328) se trouvant entre le manomètre inférieur (326) et l'échelle graduée (370).

7. Disposition de manomètre selon l'une quelconque des revendications précédentes, **caractérisée en ce que** l'une des aiguilles (366) est connectée à un arbre ou une broche se trouvant dans l'axe de rotation (350) et l'autre aiguille (364) est connectée à un cylindre (356) logé de manière à pouvoir tourner autour de l'axe de rotation (350).

8. Disposition de manomètre selon l'une quelconque des revendications précédentes 1 à 4, **caractérisée en ce que** la force provoquée par la pression ou le changement de pression dans le système de liquide des deux manomètres est transmise à l'aiguille associée (64, 66) au moyen d'une roue dentée (46, 48, 54, 56).

9. Disposition de manomètre selon la revendication 8, **caractérisée en ce que**
(a) la première aiguille (64) est connectée à une première roue dentée (54) à laquelle est transmise la force provoquée par la pression ou le changement de pression à un premier endroit (14 ; 116) situé dans le système pour liquide,
(b) la seconde aiguille (66) est connectée à une seconde roue dentée (56) à laquelle est transmise la force provoquée par la pression ou le changement de pression à un second endroit (16 ; 118) situé dans le système pour liquide, et
(c) les axes de rotation de la première et de la seconde roue dentée (54, 56) sont disposés sur un même axe par rapport aux normales médianes de l'échelle graduée (70 ; 120).

10. Disposition de manomètre selon la revendication 2 et 9, **caractérisée en ce que** la force des tubes de Bourdon (42, 44) de chaque manomètre (26, 28) est transmise à une roue dentée (46, 48) propre à chaque manomètre qui mord dans l'une des roues dentées (54, 56) respective située sur le même axe.

11. Disposition de pièce de robinetterie comprenant
(a) une pièce de robinetterie pour liquide (10 ; 100) munie d'un réducteur de pression (106), d'un filtre (12), d'un disconnecteur de tuyaux ou de système, d'un combiné filtre-réducteur de pression, d'une pièce de robinetterie multifonctionnelle destinée à la détection de fuites et à l'adoucissement de l'eau potable et de l'eau de chauffage, d'un dispositif de remplissage combiné pour systèmes d'eau fermés ou d'un disconnecteur de système à réducteur de pression (200) ou de toute autre pièce de robinetterie pour liquide, la pièce de robinetterie pour liquide présentant deux orifices dont le premier orifice est connecté à un premier point de mesure à un premier endroit situé dans la pièce de robinetterie pour liquide et le second orifice est connecté à un second point de mesure à un autre endroit situé dans la pièce de robinetterie pour liquide, et
(b) une disposition de manomètre (22 ; 122 ; 244 ; 322) selon l'une quelconque des revendications précédentes.
